# EUROPEAN PATENT APPLICATION

(11) **EP 4 789 886 A1**
(43) Date of publication of application: **12.08.2026**
(21) Application number: 24876113.2
(22) Date of filing: 25.06.2024
(51) Int. Cl.: B60K 1/02, B60K 7/00

(54) **VEHICLE DRIVE SYSTEM AND DRIVE ASSEMBLY**

(30) Priority: 08.10.2023 CN 202311301381
(71) Applicant: Dongfeng Motor Group Co., Ltd, Wuhan, Hubei 430056 (CN)
(72) Inventor: LEI, Jun, Wuhan, Hubei 430056 (CN); LIU, Huan, Wuhan, Hubei 430056 (CN); LI, Manli, Wuhan, Hubei 430056 (CN); TANG, Chen, Wuhan, Hubei 430056 (CN); WANG, Jianglin, Wuhan, Hubei 430056 (CN)
(74) Representative: Valet Patent Services Limited
(86) International application number: PCT/CN2024/101337
(87) International publication number: WO 2025/077290

(57) **Abstract**

A drive system (10) and a drive assembly (1) of a vehicle. The drive system (10) comprises: a drive motor (110); a transmission assembly (120) connected to the drive motor (110) and used to transmit a torque of the drive motor (110) to a first wheel (11) and a second wheel (12) of the vehicle, the first wheel (11) and the second wheel (12) being located at a same drive axle of the vehicle. The transmission assembly (120) comprises: a gear transmission system (121) connected to the drive motor; a differential (122), an output shaft of the differential being connected to the gear transmission system; a first output shaft (123) connected to an output shaft at one side of the differential (122) and connected to the first wheel (11); and a second output shaft (124) connected to an output shaft on another side of the differential (122) and connected to the second wheel (12). In a direction perpendicular to an output shaft of the drive motor, the second output shaft (124) is located at one side of the drive motor, and the second output shaft is collinear with a rotation axis of a portion of the gear transmission system, the second output shaft passing through the portion of the gear transmission system.

## Description

### CROSS-REFERENCE TO RELATED APPLICATION

The embodiments of the application are based on and claim the priority of the Chinese patent application No. 202311301381.2, filed on October 8, 2023. The entire contents of the Chinese patent application are incorporated herein by reference into the embodiments of the present application.

### TECHNICAL FIELD

The invention relates to the technical field of drive systems for vehicles, and in particular, to a drive system and drive assembly for a vehicle.

### BACKGROUND

A drive system for a vehicle is a system capable of outputting a torque through a drive device and transmitting the torque to wheels to drive the wheels to rotate. For an electric vehicle or a hybrid electric vehicle, the drive device in the drive system for the vehicle includes a drive motor, and the drive system is used to transmit the torque of the motor to the wheels. The related drive systems have an insufficiently compact structure, resulting in a large space occupation.

### SUMMARY

A drive system and a drive assembly for a vehicle is provided according to an embodiment of the invention, which are used to solve a technical problem of how to make a structure of the drive system more compact, thereby reducing a space occupied by the drive system.

The invention provides a drive system for a vehicle. The drive system includes: a drive motor; and a transmission assembly connected to the drive motor and used to transmit a torque of the drive motor to a first wheel and a second wheel of the vehicle, wherein the first wheel and the second wheel are located at a same drive axle of the vehicle. The transmission assembly includes: a gear transmission system, connected to the drive motor; a differential, an output shaft of the differential being connected to the gear transmission system; a first output shaft, connected to an output shaft at one side of the differential and connected to the first wheel; and a second output shaft, connected to an output shaft on another side of the differential and connected to the second wheel. In a direction perpendicular to an output shaft of the drive motor, the second output shaft is located at one side of the drive motor, and the second output shaft is collinear with a rotation axis of a portion of the gear transmission system, the second output shaft passing through said portion of the gear transmission system.

As a second aspect, the invention further provides a drive assembly. The drive assembly includes: a range extender assembly, used to charge a power battery of the vehicle; an in-wheel motor, used to drive wheels of a front drive axle of the vehicle; and the drive system as described above, used to drive wheels of a rear drive axle of the vehicle.

A drive system is provided according to an embodiment of the invention, comprising a drive motor and a transmission assembly. The transmission assembly is connected to the drive motor for transmitting torque from the drive motor to a first wheel and a second wheel located at a same drive axle. The transmission assembly includes: a gear transmission system connected to the drive motor, a differential connected to the gear transmission system, and a first output shaft and a second output shaft respectively connected to different output shafts of the differential. The first output shaft and the second output shaft are respectively connected to the first wheel and the second wheel, so that a torque of the drive motor is transmitted to the first wheel and the second wheel after a speed reduction and torque increase by the gear transmission system and a torque distribution by the differential. The second output shaft is collinear with a rotation axis of a portion of the gear transmission system, and the second output shaft passes through the portion of the gear transmission system. It can be understood that this portion of the gear transmission system has a hollow structure. This portion of the gear transmission system, while transmitting a torque, can also accommodate at least a portion of the second output shaft, and the second output shaft is collinear with the rotation axis of this portion, thereby enabling a reusing of an axial space of the gear transmission system without causing a motion interference between this portion and the second output shaft, thereby making a structure of the drive system more compact and reducing the space occupied by the drive system. Moreover, in a direction perpendicular to the output shaft of the drive motor, the second output shaft is located at one side of the drive motor, so that the second output shaft does not need to pass through the drive motor after passing through the portion of the gear transmission system. The drive motor can be a single-side output motor, reducing the manufacturing cost of the drive system. Furthermore, during a process of modifying the drive system into a distributed drive system, since the second output shaft does not pass through the drive motor, there is no need to pull the second output shaft out from the stator of the drive motor when disassembling the second output shaft, making it more convenient to modify the drive system into a distributed drive system.

### BRIEF DESCRIPTION OF DRAWINGS

FIG. 1 is a schematic structural diagram of a drive system for a vehicle according to an embodiment of the invention;
FIG. 2 is another schematic structural diagram of a drive system for a vehicle according to an embodiment of the invention;
FIG. 3 is yet another schematic structural diagram of a drive system for a vehicle according to an embodiment of the invention;
FIG. 4 is still another schematic structural diagram of a drive system for a vehicle according to an embodiment of the invention; and
FIG. 5 is a schematic structural diagram of a drive assembly for a vehicle according to an embodiment of the invention.

In the drawings, corresponding relationships between reference signs and component names are as follows:
1, drive assembly; 10, drive system; 11, first wheel; 12, second wheel; 120, transmission assembly; 121, gear transmission system; 122, differential; 123, first output shaft; 124, second output shaft; 131, first gear; 132, intermediate shaft; 133, second gear; 140, planetary gear train assembly; 141, first planetary gear train; 142, second planetary gear train; 151, sun gear; 152, first planetary gear; 153, second planetary gear; 154, external gear ring; 155, planet carrier; 156, housing; 161, first friction clutch; 162, second friction clutch; 170, oil churning member.

### DETAILED DESCRIPTION

To make the objectives, technical solutions, and advantages of the invention clearer, the invention will be further described in detail below with reference to the accompanying drawings and embodiments. It should be understood that the specific embodiments described herein are only used to explain the invention and are not intended to limit the invention.

The various specific technical features described in the specific embodiments may be combined in any suitable manner where there is no contradiction. For example, different combinations of specific technical features may form different embodiments and technical solutions. To avoid unnecessary repetition, various possible combinations of the specific technical features in the invention will not be described separately.

In the following description, the terms "first/second/ ..." are merely used to distinguish different objects and do not indicate that the objects are the same or related. It should be understood that the directional descriptions "above", "below", "outside", and "inside" refer to orientations in a normal use state, and the directions "left" and "right" refer to the left and right directions shown in the corresponding schematic diagrams, which may or may not be the left and right directions in the normal use state.

It should be noted that the terms "comprise", "include", or any other variation thereof are intended to cover a non-exclusive inclusion, such that a process, method, article, or apparatus that includes a list of elements includes not only those elements, but also other elements not expressly listed, or elements inherent to such process, method, article, or apparatus. Without further limitations, an element defined by the phrase "comprising one ..." does not preclude the presence of additional identical elements in the process, method, article, or apparatus that includes the element. The term "connected" includes both direct connection and indirect connection unless otherwise specified.

In the following embodiments, a drive system can be applied to any type of vehicles. Exemplarily, the drive system can be applied to a car or a truck. The drive system can be applied to some of drive axles of a vehicle. Exemplarily, the drive system is applied to a front drive axle of a vehicle, and the drive system can also be applied to a rear drive axle of a vehicle. For ease of explanation, a structure of the drive system will be exemplarily described below by taking an example where the drive system is applied to a rear drive axle of a car.

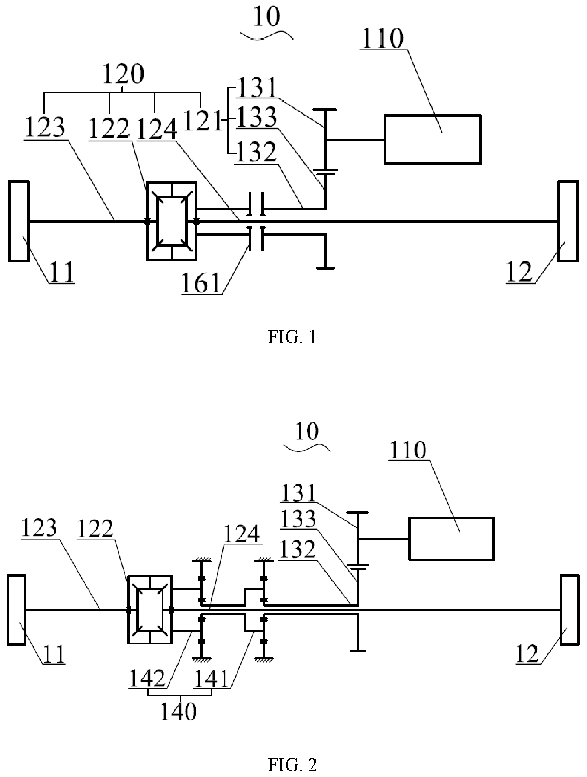

In some embodiments, as shown in FIG. 1, the drive system 10 includes a drive motor 110 and a transmission assembly 120. The drive motor 110 transmits, through the transmission assembly 120, a torque to a first wheel 11 and a second wheel 12 of the vehicle. The first wheel 11 and the second wheel 12 are located at a same drive axle. Exemplarily, this drive axle is a rear drive axle, the first wheel 11 is located at a left side of the rear drive axle, and the second wheel 12 is located at a right side of the rear drive axle. It can be understood that the drive motor 110 controls the left and right wheels of the rear drive axle through the transmission assembly 120 to drive the rear drive axle.

Optionally, the transmission assembly 120 includes: a gear transmission system 121, a differential 122, a first output shaft 123, and a second output shaft 124. The gear transmission system 121 is connected to the drive motor 110, for transmitting the torque output by the drive motor 110, after a speed reduction and torque increase are performed, to the input shaft of the differential 122. In a width direction of the vehicle, the differential 122 has two output shafts. An output shaft at one side of the differential 122 is connected to the first output shaft 123, and an output shaft on another side of the differential 122 is connected to the second output shaft 124. The first output shaft 123 is connected to the first wheel, and the second output shaft 124 is connected to the second wheel, thereby transmitting a torque of the drive motor 110 to the first wheel 11 and the second wheel 12. Furthermore, the differential 122 can automatically distribute a torque between the first wheel 11 and the second wheel 12 according to torque requirements of the first wheel 11 and the second wheel 12, and allows a rotational speed difference between the first wheel 11 and the second wheel 12. Exemplarily, when the vehicle is turning, with the first wheel 11 on an inside of a curve and the second wheel 12 on an outside of the curve, the differential 122 can allow a rotational speed of the second wheel 12 to be greater than that of the first wheel 11.

At the same time, an axis of the second output shaft 124 is collinear with an axis of the gear transmission system 121, and the second output shaft 124 passes through a portion of the gear transmission system 121. It can be understood that the portion of the gear transmission system 121 has a hollow structure. This portion, while transmitting a torque to the output shaft of the differential 122, accommodates at least a portion of the second output shaft 124. Furthermore, an axis of the second output shaft 124 is collinear with a rotation axis of this portion, and thus the second output shaft 124 does not affect a rotation of this portion, thereby enabling a reusing of an axial space of the gear transmission system 121 without causing motion interference between this portion and the second output shaft 124, thereby making a structure of the drive system 10 more compact and reducing the space occupied by the drive system 10. Moreover, in a direction perpendicular to the output shaft of the drive motor 110, the second output shaft 124 is located at one side of the drive motor 110, so that the second output shaft 124, after passing through a portion of the gear transmission system 121, does not need to pass through the drive motor 110. The drive motor 110 can be a single-side output motor, thereby reducing a manufacturing cost of the drive system 10. Furthermore, because the second output shaft 124 does not need to pass through the drive motor 110, it also facilitates modifying the drive system 10 into a distributed drive system. The modification process is exemplarily described below.

In a process of modifying the drive system 10 into a distributed drive system, the second output shaft 124 and the first output shaft 123 need to be removed. Then, the differential 122 is separated from the gear transmission system 121, and the first output shaft 123 is directly connected to the gear transmission system 121 to form a drive system for one side of the distributed drive system. If the second output shaft 124 pass through the drive motor 110, in a process of removing the second output shaft 124, the second output shaft 124 would require to be pulled out from between the portion of the gear transmission system 121 and the stator of the drive motor 110, making a removal of the second output shaft 124 inconvenient. However, in the drive system 10 provided in this embodiment, the second output shaft 124 does not need to pass through the drive motor 110. During a removal process of the second output shaft 124, it is only required to pull the second output shaft 124 out from the portion of the gear transmission system 121, making the removal more convenient.

A drive system is provided according to an embodiment of the invention, comprising a drive motor and a transmission assembly. The transmission assembly is connected to the drive motor for transmitting torque from the drive motor to a first wheel and a second wheel located at a same drive axle. The transmission assembly includes a gear transmission system connected to the drive motor, a differential connected to the gear transmission system, and a first output shaft and a second output shaft respectively connected to different output shafts of the differential. The first output shaft and the second output shaft are respectively connected to the first wheel and the second wheel, so that a torque of the drive motor is transmitted to the first wheel and the second wheel after a speed reduction and a torque increase by the gear transmission system and a torque distribution by the differential. A rotation axis of the second output shaft is collinear with a rotation axis of a portion of the gear transmission system, and the second output shaft passes through a portion of the gear transmission system. It can be understood that this portion of the gear transmission system has a hollow structure. This portion of the gear transmission system, while transmitting a torque, can also accommodate at least a portion of the second output shaft, and a rotation axis of the second output shaft is collinear with the rotation axis of this portion, thereby enabling a reusing of an axial space of the gear transmission system without causing a motion interference between this portion and the second output shaft, thereby making a structure of the drive system more compact and reducing the space occupied by the drive system. Moreover, in a direction perpendicular to the output shaft of the drive motor, the second output shaft is located at one side of the drive motor, so that the second output shaft does not need to pass through the drive motor after passing through the portion of the gear transmission system. The drive motor can be a single-side output motor, reducing the manufacturing cost of the drive system. Furthermore, during a process of modifying the drive system into a distributed drive system, since the second output shaft does not pass through the drive motor, there is no need to pull the second output shaft out from the stator of the drive motor when the second output shaft is disassembled, making it more convenient to modify the drive system into a distributed drive system.

In some embodiments, as shown in FIG. 1, the gear transmission system 121 includes a first gear 131 and an intermediate shaft 132. The first gear 131 is connected to the output shaft of the drive motor 110. A second gear 133 is fixed on the intermediate shaft 132, and the second gear 133 meshes with the first gear 131. Meanwhile, in a direction perpendicular to the output shaft of the drive motor, the intermediate shaft 132 is located at one side of the drive motor 110. It can be understood that the first gear 131 and the second gear 133 form a fixed-axis-system gear transmission system, which transmits, while performing a speed reduction and torque increase, the torque of the drive motor 110 to the intermediate shaft located at one side of the drive motor 110. Optionally, the intermediate shaft 132 and the second gear 133 have a hollow structure for the second output shaft 124 to pass through, and a rotation center of the intermediate shaft 132 is collinear with the second output shaft 124. Thus, while a motion interference between the second output shaft 124 and the intermediate shaft 132 is avoided, the hollow structures of the intermediate shaft 132 and the second gear 133 are utilized to accommodate the second output shaft 124.

In some embodiments, as shown in FIG. 2, the gear transmission system 121 further includes a planetary gear train assembly 140. The intermediate shaft 132 is connected to the input shaft of the differential 122 via the planetary gear train assembly 140. It can be understood that, the gear transmission system 121, based on having a single-stage fixed-axis-system gear transmission system, is further provided with the planetary gear train assembly 140 to further increase a transmission ratio of the gear transmission system 121. Moreover, a structure of the planetary gear train assembly 140 is more compact, allowing the gear transmission system 121 to have a smaller volume while increasing a transmission ratio of the gear transmission system 121. At the same time, a rotation axis of the sun gear of the planetary gear train assembly 140 can be collinear with the rotation axis of the intermediate shaft 132, and the sun gear of the planetary gear train assembly 140 has a hollow structure for the second output shaft 124 to pass through, thereby jointly accommodating the second output shaft 124 via the planetary gear train assembly 140 and the intermediate shaft 132, to make the structure of the drive system 10 more compact, and further reduce the space occupied by the drive system.

In some embodiments, as shown in FIG. 2, the planetary gear train assembly 140 includes a first planetary gear train 141 and a second planetary gear train 142. The sun gear of the first planetary gear train 141 is connected to the intermediate shaft 132, the planet carrier of the first planetary gear train 141 is connected to the sun gear of the second planetary gear train 142, and the planet carrier of the second planetary gear train 142 is connected to an input shaft of the differential, that is, a two-stage planetary gear transmission system is formed by the first planetary gear train 141 and the second planetary gear train 142. Optionally, a rotation axis of the sun gear of the first planetary gear train 141 and a rotation axis of the sun gear of the second planetary gear train 142 are collinear, and both the sun gear of the first planetary gear train 141 and the sun gear of the second planetary gear train 142 have hollow structures for the second output shaft 124 to pass through, that is, the sun gears of the first and second planetary gear trains are used to accommodate a portion of the second output shaft 124, making the structure of the drive system 10 more compact.

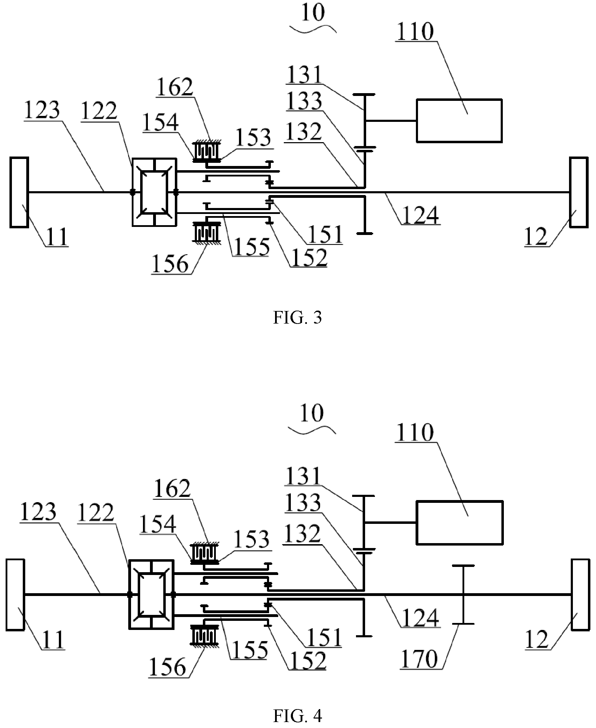

In some embodiments, as shown in FIG. 3, the planetary gear train assembly 140 includes a sun gear 151, a first planetary gear 152, a second planetary gear 153, an external gear ring 154, and a planet carrier 155. The sun gear 151 is connected to the intermediate shaft 132, and the sun gear 151 has a hollow structure for the second output shaft 124 to pass through. The second planetary gear 153 meshes with the sun gear 151. The second planetary gear 153 is fixedly connected to the first planetary gear 152, and the second planetary gear 153 meshes with the external gear ring 154. The planet carrier 155 is connected to the second planetary gear 153 and connected to the input shaft of the differential 122. It can be understood that the planetary gears of the two planetary gear trains are fixedly connected to form a compound planetary gear, and the planet carriers of the two planetary gear trains are integrated into one body, thereby achieving a larger transmission ratio while eliminating the sun gear of the second-stage planetary gear train. Furthermore, the sun gear of the second-stage planetary gear train can be eliminated to make the second output shaft 124 to only need to pass through one sun gear of the planetary gear train assembly 140. A central space of the second-stage planetary gear train, from which the sun gear is omitted, naturally forms a space for the second output shaft 124 to pass through. At the same time, during a process of modifying the drive system 10 into a distributed drive system, the second output shaft 124 only needs to be pulled out from the one sun gear of the planetary gear train assembly 140, thereby reducing a difficulty of modifying the drive system 10 into a distributed drive system.

In some embodiments, as shown in FIG. 1, the gear transmission system 121 is further provided with a first friction clutch 161. The first friction clutch 161 is disposed at a transmission shaft of the gear transmission system 121, and is used to limit a maximum torque transmitted by the gear transmission system 121. Specifically, when the torque transmitted by the gear transmission system 121 is greater than a maximum static friction force between the two friction potions of the first friction clutch 161, the two friction potions of the first friction clutch 161 will begin to rotate relative to each other, thereby making the maximum torque transmittable by the gear transmission system 121 equal to the maximum static friction force between the two friction potions. That is, a friction torque limiting of the gear transmission system 121 is achieved through the first friction clutch 161, thereby limiting a magnitude of load transmitted to the output shaft of the drive motor 110 via the gear transmission system 121, reducing a possibility of the drive motor 110 stalling due to excessive load, and extending a service life of the drive motor 110.

In some embodiments, as shown in FIG. 3, the planetary gear train assembly 140 further includes a housing 156 and a second friction clutch 162. The housing 156 is fixedly connected to the vehicle body of the vehicle, and the second friction clutch 162 connects the housing 156 and the external gear ring 154. It can be understood that the external gear ring 154 is connected to the housing 156 via the second friction clutch 162. When a torque transmitted by the planetary gear train assembly 140 is greater than the maximum torque allowed to be transmitted by the second friction clutch 162, the friction potions of the second friction clutch 162 are rotated relative to each other, causing relative rotation between the external gear ring 154 and the housing 156. That is, a friction torque limiting of the planetary gear train assembly 140 is achieved through the second friction clutch 162, thereby limiting the magnitude of the load transmitted to the output shaft of the drive motor 110 via the gear transmission system 121, reducing the possibility of the drive motor 110 stalling due to excessive load, and extending the service life of the drive motor 110.

In some embodiments, as shown in FIG. 4, the drive system 10 further includes an oil churning member 170. The oil churning member 170 is fixedly connected to the second output shaft 124. The oil churning member 170 can make an engine oil to be splashed onto the drive motor 110. Specifically, a portion of the second output shaft 124 passes through the housing of the drive motor 110, to enable the portion of the second output shaft 124 with the oil churning member 170 to be in a same cavity with the stator of the drive motor 110. At the same time, the bottom of the oil churning member 170 is immersed in an engine oil contained at the bottom of this cavity. The oil churning member 170 is driven by the second output shaft 124 to rotate, and thus a centrifugal force generated during a rotation of the oil churning member 170 can be used to splash the engine oil onto the stator of the drive motor 110. That is, by making a portion of the second output shaft 124 with the oil churning member 170 to share a cavity with the drive motor 110, while the second output shaft 124 is made to drive the second wheel 12 to rotate, the rotation of the oil churning member 170 causes the oil to splash onto the stator of the drive motor 110, thereby achieving a cooling of the drive motor 110. This is no need for an additional cooling system for the drive motor 110, making the structure of the drive system 10 more compact and further reducing a volume of the drive system 10.

In some embodiments, as shown in FIG. 4, the second output shaft 124 is located below the drive motor 110. The oil churning member 170 is located directly below the drive motor 110. The second wheel 12 is located below the drive motor 110. The second output shaft 124 is placed below the drive motor 110 to enable the second output shaft 124 to be closer to the second wheel. At the same time, the oil churning member 170 is located below the drive motor 110, and an engine oil splashed by the oil churning member can reach a bottom of the stator of the drive motor 110. It should be noted that after the engine oil is splashed onto the stator of motor, the engine oil will drip downwards under gravity, resulting in less engine oil flowing over the bottom of the stator of the motor . By disposing the oil churning member below the drive motor, the engine oil is splashed directly onto the bottom of the motor, improving a cooling capacity for the bottom of the stator of the drive motor.

A drive assembly for a vehicle is further provided according to an embodiment of the invention. The drive assembly is applied to a range-extended hybrid vehicle, and one of drive axles of the vehicle adopts a distributed drive system.

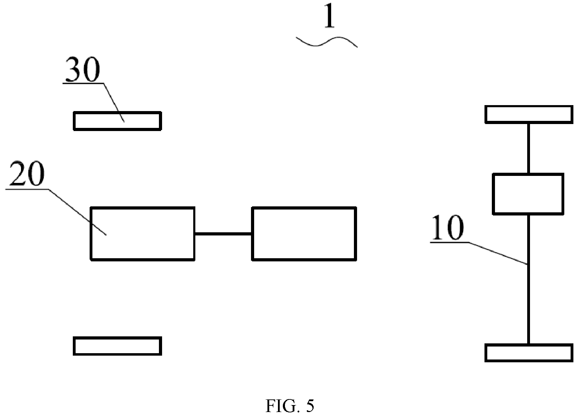

In some embodiments, as shown in FIG. 5, the drive assembly 1 includes a range extender assembly 20, an in-wheel motor 21, and a drive system 10. The range extender assembly 20 is an assembly capable of driving a generator to generate electricity through the operation of an engine, and is configured to charge a power battery of the vehicle. The in-wheel motor 21 is configured to obtain electric energy from the power battery and drive wheels of a front drive axle of the vehicle. The drive system 10 has a structure as shown in any one of FIG. 1 to FIG. 4, and is configured to drive wheels of a rear drive axle of the vehicle. It can be understood that the front drive axle of the vehicle is driven by the in-wheel motor 21, an installation space can be provided for the range extender assembly 20 disposed in a front cabin of the vehicle. Meanwhile, the arrangement of the range extender assembly 20 can also provide electric energy for the vehicle and extend a driving range of the vehicle.

The above are only preferred embodiments of the invention, and are not intended to limit the protection scope of the invention.

## Claims

1. A drive system for a vehicle, **characterized by** comprising:
a drive motor;
a transmission assembly connected to the drive motor for transmitting a torque of the drive motor to a first wheel and a second wheel of the vehicle, the first wheel and the second wheel being on a same drive axle of the vehicle;
wherein the transmission assembly comprises:
a gear transmission system connected to the drive motor;
a differential, an output shaft of which is connected to the gear transmission system;
a first output shaft, connecting an output shaft at one side of the differential to the first wheel;
a second output shaft, connecting an output shaft on another side of the differential to the second wheel, wherein in a direction perpendicular to an output shaft of the drive motor, the second output shaft is located at one side of the drive motor, the second output shaft being collinear with a rotation axis of a portion of the gear transmission system, the second output shaft passing through the portion of the gear transmission system.

2. The drive system according to claim 1, wherein the gear transmission system comprises:
a first gear connected to the output shaft of the drive motor;
an intermediate shaft fixed with a second gear thereon and connected to an input shaft of the differential, the second gear meshing with the first gear, wherein in a direction perpendicular to the output shaft of the drive motor, the intermediate shaft is located at one side of the drive motor;
wherein a rotation axis of the second output shaft is collinear with a rotation axis of the intermediate shaft, the intermediate shaft and the second gear having a hollow structure for the second output shaft to pass through.

3. The drive system according to claim 2, wherein the gear transmission system further comprises a planetary gear train assembly, the intermediate shaft being connected to the input shaft of the differential via the planetary gear train assembly;
wherein a sun gear of the planetary gear train assembly has a hollow structure for the second output shaft to pass through.

4. The drive system according to claim 3, wherein the planetary gear train assembly comprises:
a first planetary gear train, the intermediate shaft being connected to a sun gear of the first planetary gear train;
a second planetary gear train, a sun gear of which is connected to a planet carrier of the first planetary gear train, a planet carrier of the second planetary gear train being connected to the input shaft of the differential;
wherein a rotation axis of the sun gear of the first planetary gear train is collinear with a rotation axis of the sun gear of the second planetary gear train, both the sun gear of the first planetary gear train and the sun gear of the second planetary gear train having hollow structures for the second output shaft to pass through.

5. The drive system according to claim 3, wherein the planetary gear train assembly comprises:
a sun gear connected to the intermediate shaft, the sun gear having a hollow structure for the second output shaft to pass through;
a first planetary gear meshing with the sun gear;
a second planetary gear fixedly connected to the first planetary gear;
an external gear ring meshing with the second planetary gear;
a planet carrier connected to the second planetary gear and connected to the input shaft of the differential.

6. The drive system according to claim 1, wherein the gear transmission system is further provided with a first friction clutch.

7. The drive system according to claim 5, wherein the planetary gear train assembly further comprises:
a housing fixedly connected to a vehicle body of the vehicle;
a second friction clutch connecting the housing and the external gear ring.

8. The drive system according to claim 1, wherein the drive system further comprises an oil churning member, the oil churning member being connected to the second output shaft, the oil churning member being capable of causing an engine oil to be splashed onto the drive motor.

9. The drive system according to claim 8, wherein the second output shaft is located below the drive motor, the oil churning member being located directly below the drive motor.

10. A drive assembly for a vehicle, **characterized in that** the drive assembly comprises:
a range extender assembly used to charge a power battery of the vehicle;
an in-wheel motor used to drive wheels of a front drive axle of the vehicle; and
the drive system according to any one of claims 1 to 9, used to drive wheels of a rear drive axle of the vehicle.
